# EUROPÄISCHE PATENTSCHRIFT

(11) **EP 1 153 466 B1**
(45) Veröffentlichungstag und Bekanntmachung des Hinweises auf die Patenterteilung: **25.09.2002**
(21) Anmeldenummer: 00909186.9
(22) Anmeldetag: 16.02.2000
(51) Int. Cl.: H02J 9/02, H05B 37/02

(54) **NOTLICHTSYSTEM**
EMERGENCY LIGHT SYSTEM
SYSTEME LUMINEUX DE SECOURS

(30) Priorität: 18.02.1999 DE 29902892 U
(43) Veröffentlichungstag der Anmeldung: 14.11.2001
(73) Patentinhaber: CEAG Sicherheitstechnik GmbH, 59494 Soest (DE)
(72) Erfinder: PRASUHN, Jürgen, D-59494 Soest (DE)
(74) Vertreter: Grünecker, Kinkeldey, Stockmair & Schwanhäusser Anwaltssozietät
(86) Internationale Anmeldenummer: EP0001262
(87) Internationale Veröffentlichungsnummer: WO00049700

(56) Entgegenhaltungen:
- EP-A- 0 537 651
- DE-A- 19 611 161
- FR-A- 2 696 863
- US-A- 4 947 302
- US-A- 5 668 537
- US-A- 5 770 928

## Beschreibung

Die Erfindung betrifft ein Notlichtsystem mit wenigstens einer Überwachungs- und Steuervorrichtung und einer Vielzahl mit dieser verbundenen Notlichtelementen, wie Sicherheitsleuchten oder dergleichen, wobei die Überwachungs- und Steuervorrichtung zumindest Anzeige- und Speichereinrichtungen zur Darstellung beziehungsweise Speicherung von Systemparametem aufweist.

Ein solches Notlichtsystem ist aus der Praxis bekannt, bei dem die Überwachungs- und Steuereinrichtung an einer zentralen Stelle in einem Gebäude oder dergleichen Systemparameter von den angeschlossenen Systemen und Leuchten als Notlichtelementen anzeigt und/oder speichert Ein solcher Systemparameter sind beispielsweise Status eines angeschlossenen Systems, Prüfzeitpunkte, Orts- und Gerätebezeichnungen, Serviceinformationen, Ergebnisse von Test- und Prüfzyklen und dergleichen. Weiterhin gehören zu den Systemparametern Anzahl und Orte der Notlichtelemente, Ladezustände von Batterien, deren Auf- oder Entladezeiten, Betriebszeit der Notlichtelemente usw.

Bei dem vorbekannten Notlichtsystem werden solche Systemparameter direkt in der Überwachungs- und Steuervorrichtung abgespeichert und können beispielsweise dort ausgelesen oder abgerufen werden. Da solche Überwachungs- und Steuervorrichtungen üblicherweise in elektrischen Betriebsräumen (Kellerräume) oder in Verteilerschränken angeordnet werden, ist eine Bedienung dieser Vorrichtungen zum Abrufen verschiedener Systemparameter aus der Speichereinrichtung zur Darstellung auf beispielsweise der Anzeigeeinrichtung schwierig und die damit verbundene Arbeit zeitaufwendig und kostenintensiv. Dies gilt analog für eine Programmierung der Überwachungs- und Steuervorrichtung vor Ort.

In der US-A-4,947,302 wird ein Verfahren und eine Vorrichtung zur Verbesserung eines Einsatzes eines Beleuchtungssystems mit variablen Parametern beschrieben. Dieses Beleuchtungssystem wird auf dem Unterhaltungssektor eingesetzt und die variablen Parameter betreffend Ausrichtung, verwendete Lichtfilter, Lichtfarbe, Strahlgröße, Strahlneigung, Strahlformen und dergleichen. Alle diese Parameter sind lokal abspeicherbar und das zugehörige Speichermedium kann eine Speicherkarte oder ein in anderer Weise entnehmbares Speichermedium sein. Dem Gesamtbeleuchtungssystem ist eine Überwachungs- und Steuereinrichtung zugeordnet, die ebenfalls über eine Speichereinrichtung verfügt. Diese ist fest installiert und nicht entnehmbar.

Hinweise auf Notbeleuchtungssysteme sind der US-A-4,947,302 nicht entnehmbar.

In der FR-A-2 696 863 wird allgemein ein Adapter im Zusammenhang mit einem Laufwerk beschrieben. Der Adapter dient dazu, unterschiedliche Speichermittel mittels des Laufwerks beschreiben und auslesen zu können.

Allerdings wird weder die Verwendung des Adapters bzw. des Speichermediums im Zusammenhang mit einer Überwachungs- und Steuereinrichtung noch im weiteren Zusammenhang mit einem Notlichtsystem beschrieben.

Der Erfindung liegt daher die Aufgabe zugrunde, ein Notlichtsystem der eingangs genannten Art dahingehend zu verbessern, dass in einfacher Weise eine Überprüfung der Systemparameter bzw. eine Programmierung der Überwachungsund Steuervorrichtung erfolgen kann.

Diese Aufgabe wird im Zusammenhang mit den Merkmalen des Oberbegriffs des Anspruchs 1 dadurch gelöst, daß die Speichereinrichtung der Überwachungs- und Steuervorrichtung wenigstens ein entnehmbares und transportables Speichermedium zur Speicherung zumindest einiger Systemparameter aufweist.

Mittels dieses Speichermediums sind beispielsweise alle für das Notlichtsystem relevanten Systemparameter abspeicherbar und an einem anderen Ort auslesbar. Weiterhin kann mittels des Speichermediums die Überwachungs- und Steuervorrichtung programmiert werden durch entsprechende auf dem Speichermedium abgespeicherte Systemparameter. Durch ein solches Speichermedium läßt sich außerdem eine höhere Servicefreundlichkeit erreichen, da zum Beispiel nach Austausch einer Überwachungsund Steuervorrichtung das Speichermedium mit Konfigurationsdaten als Systemparametern von der eingetauschten Überwachungs- und Steuervorrichtung ausgelesen werden kann. Folglich ist kein weiterer Datentransfer oder eine Programmierung der Überwachungs- und Steuervorrichtung vor Ort erforderlich. Weiterhin besteht die Möglichkeit durch unterschiedliche, insbesondere werksseitige Programmierungen des Speichermediums Funktionsoptionen der Überwachungs- und Steuervorrichtung freizuschalten, Software-Updates vorzunehmen oder unterschiedliche Sprachversionen zu realisieren.

Um beispielsweise direkt an der Überwachungs- und Steuervorrichtung eine Initialisierung oder einen Abschluß der Speicherung im Hinblick auf das entnehmbare Speichermedium durchführen zu können oder auch direkt Einfluß auf die Überwachungs- und Steuervorrichtung zu nehmen, kann diese eine Tastatur aufweisen. Es ist ebenfalls möglich, daß die Überwachungs- und Steuervorrichtung ein Bedienpaneel mit einer Anzahl von Tasten oder Knöpfen aufweist.

Bei einem einfachen Ausführungsbeispiel für eine Überwachungs- und Steuervorrichtung kann diese ohne eigene Tastatur oder dergleichen ausgebildet sein, wobei in diesem Fall eine Tastatur oder dergleichen an die Vorrichtung anschließbar sein kann.

Zum Anschluß der Tastatur kann ein spezieller Tastaturanschluß vorgesehen sein. Vorteilhaft ist in diesem Zusammenhang, wenn der Tastaturanschluß beziehungsweise ein Anschluß für weitere externe Geräte, durch eine serielle und/oder parallele Schnittstelle gebildet ist. Bezüglich einer solchen Schnittstelle sei allerdings angemerkt, daß ein Datentransfer oder ein Ausdruck von Systemparametem mittels eines entsprechenden Datenkabels zwar durchgeführt werden kann, allerdings die Länge eines solchen Datenkabels funktionsbedingt auf zirka fünf Meter bei einer parallelen und auf zirka 10 Meter bei einer seriellen Schnittstelle begrenzt ist. Aus diesem Grunde sind diese Schnittstellen für einen Datentransfer von oder zu sowie zur Programmierung der Überwachungs- und Steuervorrichtung zwar geeignet aber nicht praxisgerecht. Wie bereits erwähnt, sind solche Überwachungs- und Steuervorrichtungen häufig an schlecht zugänglichen Stellen innerhalb eines Gebäudes oder dergleichen angeordnet, so daß zu diesen Stellen ein unhandlicher Computer, Drucker oder eine Tastatur zur Programmierung und Datenausgabe mittels des Datenkabels transportiert werden müßte. Das ist durch den Einsatz des einfach transportierbaren Speichermediums gemäß Erfindung nicht mehr notwendig.

Das erfindungsgemäße Speichermedium kann in unterschiedlichen Ausführungsformen eingesetzt werden. Falls die Überwachungs- und Steuervorrichtung über ein separates Disketten- oder CD-ROM-Laufwerk verfügt, könnte ein solches Speichermedium eine Diskette oder eine CD-ROM sein. Um allerdings ein noch kleineres und unempfindlicheres Speichermedium zu erhalten, kann dieses durch eine verschleißfreie Halbleiterspeicherkarte gebildet sein. Solche Halbleiterspeicherkarten sind beispielsweise ein PCMCIA-Karte, eine Solid-State-Flopy-Disk-Card (SSFDC), eine Smart-Media-Card der Firma Toshiba Corporation, eine Compact-Flash-Card oder eine Static-Ram-Card.

Im einfachsten Fall ist eine solche Halbleiterspeicherkarte als Speichermedium direkt in einen leicht zugänglichen Schlitz oder dergleichen insbesondere in einer Sichtseite der Überwachungs- und Steuervorrichtung einsteckbar.

Es ist ebenfalls möglich, daß beispielsweise ein Adapter zum Einstecken einer solchen Halbleiterspeicherkarte als Teil der Überwachungs- und Steuervorrichtung beziehungsweise mit dieser verbindbar angeordnet ist. Durch Austausch des Adapters können unterschiedliche Halbleiterspeicherkarten für die Überwachungs- und Steuervorrichtung verwendet werden.

Um insbesondere bei einer Halbleiterspeicherkarte als Speichermedium diese in handelsüblichen Disketten-Laufwerken auslesen beziehungsweise programmieren zu können, kann ein Disketten-Adapter für insbesondere eine SSFDC oder eine PCMCIA vorgesehen sein, in den diese Halbleiterspeicherkarten eingesteckt und mittels des üblichen Disketten-Laufwerks bearbeitet werden können.

In diesem Zusammenhang besteht ebenfalls die Möglichkeit, daß das Speichermedium direkt oder über einen Adapter mit einer Schnittstelle der Überwachungs- und Steuervorrichtung verbindbar ist. Ist beispielsweise das Speichermedium eine Diskette, könnte auf diese Weise ein tragbares Diskettenlaufwerk angeschlossen werden. Außerdem könnte ein Adapter zum Bearbeiten von Halbleiterspeicherkarten auf diese Weise mit der Überwachungs- und Steuervorrichtung verbunden werden.

In allen vorangehend geschilderten Fällen ist es auf jeden Fall möglich, das Speichermedium ohne beispielsweise öffnen eines Gehäuses der Überwachungs- und Steuervorrichtung dieser zu entnehmen oder zuzuordnen.

Um bereits an einem vom Notlichtsystem unabhängigen und von diesem entfernten Arbeitsplatz eine Programmierung auszuführen, Prüfdaten auszuwerten, eine Datensicherung vorzunehmen, Daten über eine Anlagenkonfiguration abzuspeichem oder dergleichen, kann das Speichermedium bezüglich zumindest einer Anzahl von Systemparametern extern vorprogrammierbar sein. Dies kann beispielsweise durch einen an dem Arbeitsplatz befindlichen Computer erfolgen, wobei ein Datenaustausch mit einer Halbleiterspeicherkarte als Speichermedium in der oben beschriebenen Weise erfolgen kann, siehe Adapter für Disketten-Laufwerk, separater Adapter zum Anschluß an eine serielleund/oder parallele Schnittstelle usw.. Dadurch kann bei einer bekannten Anlagenkonfiguration eine entsprechende Halbleiterspeicherkarte oder mehrere davon als fertig programmierte Speicherkarten zur Initialisierung und weiteren Überwachung des Notlichtsystems zusammen mit den weiteren Bauteilen des Notlichtsystems ausgeliefert werden. Eine entsprechende Programmierung durch den Betreiber des Notlichtsystems ist in diesem Zusammenhang nicht mehr notwendig, so daß damit verbundene zeitaufwendige Programmierarbeiten für den Betreiber entfalten.

Im folgenden wird ein vorteilhaftes Ausführungsbeispiel der Erfindung anhand der in der Zeichnung beigefügten Figuren näher erläutert.

Es zeigen:
- Figur 1: eine prinzipielle Darstellung eines erfindungsgemäßen Notlichtsystems in einem Gebäude, und
- Figur 2: eine vergrößerte Vorderansicht einer Überwachungs- und Steuervorrichtung des Notlichtsystems nach Figur 1.

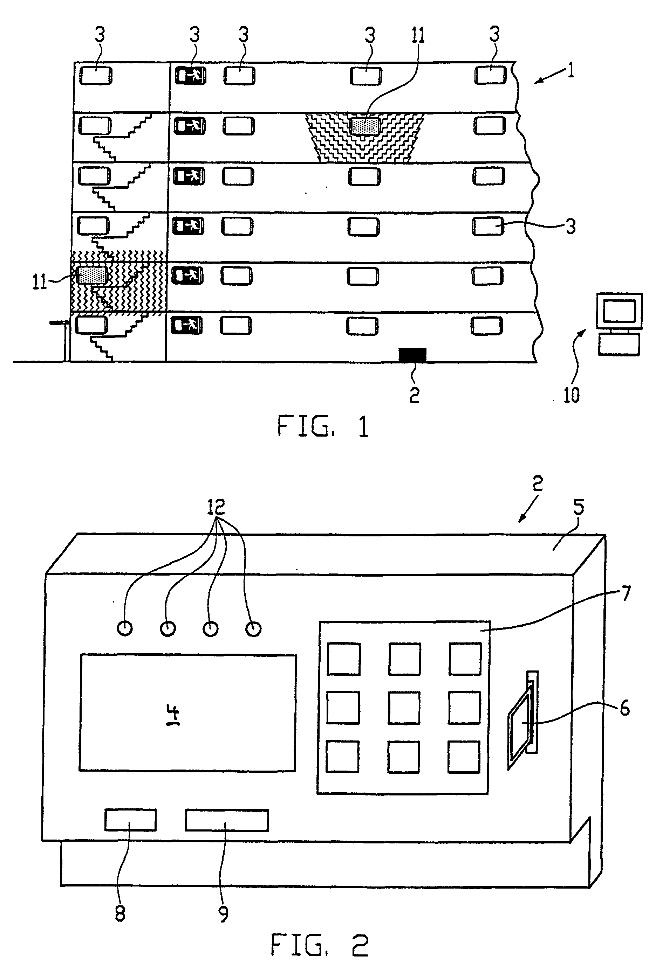

In Figur 1 ist prinzipiell ein erfindungsgemäßes Notlichtsystem 1 für ein größeres Gebäude dargestellt. In verschiedenen Stockwerken dieses Gebäudes sind eine Vielzahl von Notlichtelementen 3, 11 angeordnet. Solche Notlichtelemente sind beispielsweise Notleuchten, Hinweisleuchten für einen Notausgang oder dergleichen. Die Notlichtelemente sind in der Regel mit einer zentralen Spannungsversorgung verbunden, die Wechselspannung oder Gleichspannung an die Notlichtelemente liefert. Diese sind sowohl durch Wechsel- als auch Gleichspannung betreibbar.

Die Notlichtelemente sind vorzugsweise parallel mit einer Überwachungs- und Steuervorrichtung verbunden. Diese kann die Spannungsversorgung der Notlichtelemente überwachen und gegebenenfalls auf eine Notspannungsversorgung umschalten. Weiterhin sind durch die Überwachungs- und Steuervorrichtung Test- und Prüfzyklen durchführbar, wobei entsprechende Prüfzeitpunkte, Orts- und Gerätebezeichnungen sowie Serviceinformationen in der Vorrichtung abgespeichert sein können.

In Figur 1 ist die Überwachungs- und Steuervorrichtung 2 im untersten Stockwerk angeordnet, wobei in der Regel eine solche Anordnung in Kellerräumen oder in Verteilerschränken erfolgt.

Durch die Überwachungs- und Steuervorrichtung ist beispielsweise auch der Ausfall von Notlichtelementen 11 feststellbar und in einem sogenannten Prüfbuch in einer in der Überwachungs- und Steuervorrichtung enthaltenen Speichereinrichtung ablegbar.

Solche Notlichtsysteme können bei umfangreicheren Anlagenkonfigurationen auch mehr als 1000 Notlichtelemente mit entsprechend vielen Zielorten und Gerätebezeichnungen umfassen.

Bei dem erfindungsgemäßen Notlichtsystem 1 ist in der Überwachungs- und Steuervorrichtung 2 ein Speichermedium 6, siehe Figur 2, einsteck- und entnehmbar, das zu einem externen Computer 10, siehe Figur 1, einfach transportierbar ist. Durch diesen Computer 10 kann eine Auswertung des Speichermediums oder auch dessen Programmierung zur Initialisierung und zur Vorgabe bestimmter Systemparameter des Notlichtsystem 1 über die Überwachungs- und Steuervorrichtung 2 erfolgen.

In Figur 2 ist die Überwachungs- und Steuervorrichtung 2 vergrößert in einer Vorderansicht dargestellt. Auf einer Sichtseite dieser Vorrichtung 2 sind eine Tastatur 7, eine Anzeigeeinrichtung 4 in Form eines Displays, eine serielle Schnittstelle 8, eine parallele Schnittstelle 9 sowie eine Anzahl von LED-Leuchten 12 angeordnet. Neben der Tastatur 7 ist außerdem eine schlitzartige Öffnung in der Überwachungs- und Steuervorrichtung 2 ausgebildet, in die eine Halbleiterspeicherkarte 6 als Speichermedium einsteckbar ist. Als eine solche Halbleiterspeicherkarte kann eine PCMCIA, Solid-State-Flopy-Disk-Card, Smart-Media-Card, Compact-Flash-Card, Static-Ram-Card oder dergleichen eingesetzt werden.

Bei einem weiteren Ausführungsbeispiel kann statt einer solchen schlitzartigen Öffnung ein Adapter beispielsweise zum Anschluß an eine der Schnittstellen 8, 9 eingesetzt werden. In diesen ist dann die Halbleiterspeicherkarte 6 einsteckbar. Ein entsprechender Adapter kann auch zum Bearbeiten der Halbleiterspeicherkarte mittels des externen Computers 10, siehe Figur 1, verwendet werden.

Im folgenden wird die Erfindung kurz anhand der Figuren erläutert.

Mittels der Halbleiterspeicherkarte 6 als Speichermedium können Systemparameter des Notlichtsystems 1 mittels eines externen Computers 10 abgespeichert werden sowie von diesem während des Betriebs des Notlichtsystems 1 über die Überwachungs- und Steuervorrichtung 2 auf der Halbleiterspeicherkarte 6 abgespeicherte Systemparameter ausgelesen werden. Solche Systemparameter sind beispielsweise der Status von den angeschlossenen Systemen und Leuchten, die Ergebnisse von Test- und Prüfzyklen, Prüfzeitpunkte, Orts- und Gerätebezeichnungen sowie Serviceinformationen. Weitere Systemparameter betreffen beispielsweise die Anlagenkonfiguration mit entsprechenden Zielortbezeichnungen oder dergleichen. Auch bei Austausch einer Überwachungsund Steuervorrichtung kann mittels der Halbleiterspeicherkarte eine neue Überwachungs- und Steuervorrichtung schnell mit den notwendigen Systemparametem, wie Konfigurationsdaten oder dergleichen, programmiert werden. Es besteht weiterhin die Möglichkeit, durch unterschiedliche werksseitige Programmierungen der Halbleiterspeicherkarte Funktionsoptionen der Überwachungs- und Steuervorrichtung freizuschalten, Software-Updates vorzunehmen oder unterschiedliche Sprachversionen zu realisieren.

Außerdem kann eine fertig programmierte Halbleiterspeicherkarte einem Betreiber des Notlichtsystems zur Verfügung gestellt werden, wobei auf einer solchen Halbleiterspeicherkarte alle notwendigen Systemparameter des Notlichtsystems bereits abgelegt sind, so daß für den Betreiber des Notlichtsystems die entsprechenden zeitaufwendigen Programmierarbeiten entfallen.

## Patentansprüche

1. Notlichtsystem (1) mit wenigstens einer Überwachungs- und Steuervorrichtung (2) und einer Vielzahl mit dieser verbundenen Notlichtelementen (3), wie Sicherheitsleuchten oder dergleichen, wobei die Überwachungs- und Steuervorrichtung zumindest Anzeige- und Speichereinrichtungen (4, 5) zur Darstellung beziehungsweise Speicherung von Systemparametem aufweist,
**dadurch gekennzeichnet,**
**daß** die Speichereinrichtung (5) der Überwachungs- und Steuervorrichtung (2) wenigstens ein entnehmbares und transportables Speichermedium (6) zur Speicherung zumindest einiger Systemparameter aufweist.

2. Notlichtsystem nach Anspruch 1,
**dadurch gekennzeichnet,**
**daß** die Überwachungs- und Steuervorrichtung (2) eine Tastatur (7) aufweist.

3. Notlichtsystem nach Anspruch 1 oder 2,
**dadurch gekennzeichnet,**
**daß** eine Tastatur (7) an die Überwachungs- und Steuervorrichtung (2) anschließbar ist.

4. Notlichtsystem nach wenigstens einem der vorangehenden Ansprüche,
**dadurch gekennzeichnet,**
**daß** die Überwachungs- und Steuervorrichtung (2) eine serielle und/oder parallele Schnittstelle (8, 9) aufweist.

5. Notlichtsystem nach wenigstens einem der vorangehenden Ansprüche,
**dadurch gekennzeichnet,**
**daß** das Speichermedium (6) mittels eines externen Computers lesbar, beschreibbar und insbesondere wieder beschreibbar ist.

6. Notlichtsystem nach wenigstens einem der vorangehenden Ansprüche,
**dadurch gekennzeichnet,**
**daß** das Speichermedium (6) eine Halbleiterspeicherkarte ist.

7. Notlichtsystem nach wenigstens einem der vorangehenden Ansprüche,
**dadurch gekennzeichnet,**
**daß** das Speichermedium (6) in die Überwachungs- und Steuervorrichtung (2) einsteckbar ist.

8. Notlichtsystem nach wenigstens einem der vorangehenden Ansprüche,
**dadurch gekennzeichnet,**
**daß** die Überwachungs- und Steuervorrichtung (2) einen Adapter zur Aufnahme des Speichermedium (6) aufweist.

9. Notlichtsystem nach wenigstens einem der vorangehenden Ansprüche,
**dadurch gekennzeichnet,**
**daß** das Speichermedium (6) mittels insbesondere eines Adapters in einem Diskettenlaufwerk auslesbar und/oder programmierbar ist.

10. Notlichtsystem nach wenigstens einem der vorangehenden Ansprüche,
**dadurch gekennzeichnet,**
**daß** das Speichermedium (6) direkt oder über einen Adapter mit einer Schnittstelle (8, 9) der Überwachungs- und Steuervorrichtung (2) verbindbar ist.

11. Notlichtsystem nach wenigstens einem der vorangehenden Ansprüche,
**dadurch gekennzeichnet,**
**daß** das Speichermedium (6) bezüglich zumindest einer Anzahl von Systemparametem extern vorprogrammierbar ist.

## Claims

1. Emergency light system (1) comprising at least one monitoring and control device (2) and a plurality of emergency light elements (3), such as safety luminaires or the like, connected thereto, the monitoring and control device having at least display and storage devices (4, 5) for displaying or storing system parameters, **characterised in that** the storage device (5) of the monitoring and control device (2) has at least one removable, transportable storage medium (6) for storing at least some system parameters.

2. Emergency light system according to claim 1, **characterised in that** the monitoring and control device (2) has a keyboard (7).

3. Emergency light system according to claim 1 or claim 2, **characterised in that** a keyboard (7) can be connected to the monitoring and control device (2).

4. Emergency light system according to at least one of the preceding claims, **characterised in that** the monitoring and control device (2) has a serial and/or parallel interface (8, 9).

5. Emergency light system according to at least one of the preceding claims, **characterised in that** the storage medium (6) is readable, writeable and, in particular, rewriteable by means of an external computer.

6. Emergency light system according to at least one of the preceding claims, **characterised in that** the storage medium (6) is a semiconductor memory card.

7. Emergency light system according to at least one of the preceding claims, **characterised in that** the storage medium (6) can be inserted into the monitoring and control device (2).

8. Emergency light system according to at least one of the preceding claims, **characterised in that** the monitoring and control device (2) has an adapter for receiving the storage medium (6).

9. Emergency light system according to at least one of the preceding claims, **characterised in that** the storage medium (6) is readable and/or programmable in a disk drive, in particular, by means of an adapter.

10. Emergency light system according to at least one of the preceding claims, **characterised in that** the storage medium (6) can be connected directly or via an adapter to an interface (8, 9) of the monitoring and control device (2).

11. Emergency light system according to at least one of the preceding claims, **characterised in that** the storage medium (6) is externally preprogrammable with respect to at least a number of system parameters.

## Revendications

1. Système (1) d'éclairage de secours avec au moins un dispositif (2) de surveillance et de commande et une pluralité d'éléments (3) d'éclairage de secours reliés à celui-ci, tels que des luminaires de secours ou des équipements similaires, dans lequel le dispositif de surveillance et de commande comprend au moins des organes (4, 5) d'indication et de stockage pour une représentation ou une mémorisation de paramètres de système,
**caractérisé en ce que** l'organe (5) de stockage du dispositif (2) de surveillance et de commande comprend au moins un support (6) de mémorisation amovible et transportable pour la mémorisation d'au moins certains paramètres de système.

2. Système d'éclairage de secours selon la revendication 1, **caractérisé en ce que** le dispositif (2) de surveillance et de commande comprend un clavier (7).

3. Système d'éclairage de secours selon la revendication 1 ou 2, **caractérisé en ce qu'**un clavier (7) peut être relié au dispositif (2) de surveillance et de commande.

4. Système d'éclairage de secours selon l'une au moins des revendications précédentes, **caractérisé en ce que** le dispositif (2) de surveillance et de commande comprend une interface (8, 9) série et/ou parallèle.

5. Système d'éclairage de secours selon l'une au moins des revendications précédentes, **caractérisé en ce que** le support (6) de mémorisation peut être lu et écrit au moyen d'un ordinateur externe, et qu'en particulier il est réinscriptible.

6. Système d'éclairage de secours selon l'une au moins des revendications précédentes, **caractérisé en ce que** le support (6) de mémorisation est une carte de mémoire à semi-conducteur.

7. Système d'éclairage de secours selon l'une au moins des revendications précédentes, **caractérisé en ce que** le support (6) de mémorisation peut être inséré dans le dispositif (2) de surveillance et de commande.

8. Système d'éclairage de secours selon l'une au moins des revendications précédentes, **caractérisé en ce que** le dispositif (2) de surveillance et de commande comprend un adaptateur pour la réception du support (6) de stockage.

9. Système d'éclairage de secours selon l'une au moins des revendications précédentes, **caractérisé en ce que** le support (6) de mémorisation peut être lu et/ou programmé dans un lecteur de disquette au moyen en particulier d'un adaptateur.

10. Système d'éclairage de secours selon l'une au moins des revendications précédentes, **caractérisé en ce que** le support (6) de mémorisation peut être relié à une interface (8, 9) du dispositif (2) de surveillance et de commande, directement ou par l'intermédiaire d'un adaptateur.

11. Système d'éclairage de secours selon l'une au moins des revendications précédentes, **caractérisé en ce que** le support (6) de mémorisation peut être programmé d'avance à l'extérieur pour au moins un certain nombre de paramètres de système.
